# EUROPEAN PATENT SPECIFICATION

(11) **EP 4 186 484 B1**
(45) Date of publication and mention of the grant of the patent: **14.08.2024**
(21) Application number: 21211278.3
(22) Date of filing: 30.11.2021
(51) Int. Cl.: A61G 7/10, B62K 11/00, A61H 3/04, A61H 3/00

(54) **MOBILITY ASSISTANCE DEVICE**
MOBILITÄTSHILFSVORRICHTUNG
DISPOSITIF D'AIDE À LA MOBILITÉ

(43) Date of publication of application: 31.05.2023
(73) Proprietor: RooWalk Mobility GmbH, 12681 Berlin (DE)
(72) Inventor: Pardowitz, Benjamin, 12045 Berlin (DE)
(74) Representative: Hertin und Partner Rechts- und Patentanwälte PartG mbB

(56) References cited:
- WO-A1-2010/139936
- DE-U1- 202008 017 221
- JP-A- 2011 115 323

## Description

The invention relates to a mobility assistance device comprising self-balancing wheels connected via a frame to a seesaw assembly. The seesaw assembly is configured to receive a user at one end and comprises a counterweight at the other end, wherein the counterweight is configured to at least partially compensate the weight of the user. The self-balancing wheels are controlled independently of each other via a control unit according to an inverse-pendulum principle. The device can advantageously support a wide range of user postures and movements including walking, jumping and crawling. Furthermore, the control unit stabilizes the device and the user to enable safe mobility.

### BACKGROUND AND PRIOR ART

Mobility assistance devices are commonly used to assist persons who due to disability, injury, age or illness cannot maintain a normal posture, gait or walking speed. Examples of traditional mobility assistance devices include walking sticks, crutches, wheelchairs, walkers or walking frames such as Zimmer frames and the like. These typically rely heavily on the user's existing motor functions, for example in the upper body and specifically in the arms and hands, to drive them. In general, their use is restricted to adults or older children who already have sufficient strength and motor control to drive the device. Furthermore, they do not encourage normal walking patterns at normal speeds. These devices are particularly unsuitable for users where congenital or acquired neuromuscular diseases affect muscle strength, motor control, balance or posture in such a way that they are unable to stand and walk independently, who have generally weakened motor functions and for younger children, such as those with cerebral palsy, who cannot rely on their arms to drive a mobility assistance device.

Among users who require assistance with mobility, a large proportion are children with long-term or hereditary conditions. Other users include those who are elderly, frail, have suffered an injury or a stroke. There exists a large imbalance in the market which is mainly directed to such adult users or those who have experience in mobility before an injury took place. In the case of children, the special requirements of training them to improve their strength and balance are added to the general needs of all children to learn, explore and socialize as they grow. Regular and independent movements should ideally take place from early childhood in order to secure both physical and cognitive development opportunities in the long term. Furthermore, the needs and sizes of children tend to change quickly while they have generally reduced strength compared to older users. In particular in the case of cerebral palsy, depending on the severity of the condition, children may have lowered motor skills and strength but still enough for their movement intentions to be read and interpreted by an outside person. Around 1 - 4 out of every 1000 children are born with cerebral palsy.

To assist such persons with limited mobility in developing their muscle strength, motor control, balance and posture with a wide range of movement possibilities, a parent, therapist or assistant may partially lift them up and hold them straight by holding their waist or hips to prevent them from falling. At the same time, the arms and legs may be kept generally free such that the affected persons may develop better control and strength in their limbs. The assistant may observe and interpret the person's movement to support intentional movements such as a deliberate squatting to the ground while suppressing unwanted movements such as falls or spastic movements. This requires a high degree of reliance on the assistant and does not allow such persons to become independent and interact with their peers at eye level.

Especially in the case of children and teenagers, this can significantly affect the development of the user in other areas such as social skills. The need for constant assistance by another person not only reduces the user's sense of confidence but also limits their access to a variety of places and activities such as outdoor areas, schools, leisure facilities and the like. Often the child and/or the assistive device must be carried over a step or obstacle by the carer. The reliance on a carer, who is often a family member, may lead to overburdening the user's family environment. Thus by excessive reliance on others, the user not only does not develop physically but is also hindered from developing their own personality, interests and social relationships.

Devices have therefore been developed to perform the role of the assistant and allow improved mobility for users with reduced muscle strength overall, reduced motor functions and a tendency to become quickly exhausted.

As an example, WO 2010/139936 A1 discloses a wheeled device comprising a load, wherein the load may itself be a battery driving the wheels. The device may stabilize the walking speed of a user due to the added inertia caused by the load. In use, if the user is pushing the device so that the device is in front of the user, then the device may produce a pulling force when the user slows down, and a pushing force when the user begins to accelerate. Depending on the position of the load, the effective weight of the user may be altered. It is important to highlight here that the device is still mainly driven and controlled by the user who is described as being a frail elderly person for example.

In a particular embodiment of WO 2010/139936 shown in Fig. 10 , the device comprises a hinge extending from a distal end of the device, close to the wheels. The hinge comprises a load which functions as a counterweight to reduce the effective weight of the user. Although the user may hold the proximal end of the device with their hands, an alternative is the use of a belt or the like to attach the device to the user, leaving the hands free. The device may thus provide some relief and assistance to a frail user. In a further embodiment illustrated in Fig. 4, WO 2010/139936 A1 discloses a speed controller for the user to set a desired walking speed. The user must pay attention while walking to safely control the speed themselves. Apart from the need for user intervention in the control unit, the device still relies heavily on the user's own balance and motor functions. The device cannot, for example, assist the user in turning - this must be done by overcoming the inertia caused by the load. If the user chooses to crouch down, for example to pick up an object from the floor, the angle at which the load is raised to would cause the device to stop supporting the user. The device also has no control system able to distinguish between crouching and falling and therefore is only suited to users with a reasonable degree of balance and good motor functions.

Devices have also been developed to both reduce the effective weight of the user and prevent falling for those with reduced motor skills. As an example, the "Hibbot" walking aid by Made for Movement is a passive (not motorized) device equipped with a set of rods arranged in an A-shaped frame between which a hip-supporting belt is provided at a height corresponding to a standing position. The belt is connected by pneumatic or spring-loaded arms to the frame. The belt supports the user's hips and replaces the assistant's hands in the case of training a child to walk. The rods prevent the whole device from tipping forwards and provide a stable base, as well as preventing falling as the belt may be clipped directly onto the rods. The device is also equipped with a pair of parallel wheels arranged to follow the user from behind and a counterweight arranged behind the wheels on an arm extending from and pivoting about the wheel axis. The counterweight reduces the effective weight of the user, allowing those with weaker muscle tone to stand upright and walk. Due to the frame arrangement, this device provides a higher degree of safety to those with limited balance and mobility. The device also allows users, typically children with cerebral palsy, to interact with peers at eye level and take part in activities such as eating and playing due to the hands and feet being kept free.

Similarly to WO 2010/139936 A1 however, the angle of the arm carrying the counterweight and its low height from the ground also limit the support provided by this device. If the user were to squat, the counterweight would not provide enough support to lift them up again. An assisting adult would be required in case this occurred. When the belt is clipped to the rods, the user can no longer crouch or tiptoe as the height of their hips is effectively fixed within a narrow range. The device provides no active assistance for the user to move forwards, backwards or to turn left or right and therefore, despite its better safety, is limited in the range of movements it can support.

Furthermore, due to the lack of motorized support in the "Hibbot" walking aid, the user must at least partially carry their own weight as well as that of the device. With their own weight being partially supported by the device, the ground reaction to the effective body weight of the user is lowered. This decreases the horizontal force of the foot against the ground. With an increased weight to be pulled by the user and a lowered grip on the ground, a risk of sliding occurs. The need to pull the weight of the device can also become a particular hindrance when moving over uneven ground or attempting to overcome minor obstacles. When walking uphill, the user needs assistance from another adult to maintain their walking speed and prevent exhaustion. When walking downhill, the user needs the adult's assistance to safely come to a halt.

When children are using such a device, they must additionally be heavily supervised with frequent active intervention from an adult. The limited range of movement a child can make without help from an adult prevents the child from exploring their surroundings effectively such as lifting objects from the ground or reaching upwards. Therefore there remains a heavy strain on others.

To provide a greater degree of assistance to users, motorized devices have also been developed. An example is JP 2011115323 A which discloses a walking assistance robot for training a user, wherein the robot comprises a main body carried by a set of four wheels which follow the user from behind. An arm extends from the main body of the robot with an attachment belt for a user's hips. The belt and the robot are fitted with a plethora of sensors configured to either support or assist the movement of a user to promote a normal gait. To do this, the positions and motions of virtually all of the user's limbs are monitored and interpreted. The wheels of the robot are also motorized and controlled using feedback from the sensors. The robot is configured to move the arm and the user upwards when the sensors detect motions consistent with falling.

The size of the robot is however large, resulting in a large turning circle which is not compatible with use in everyday environments. Furthermore, the robot is configured for supporting a user when training to walk only. Other movement types are not foreseen. Due to the size of the robot and the arrangement of the four wheels, it would be impossible for the user to overcome small obstacles on the ground, a threshold or set of stairs with the robot. It is therefore only suited for use in controlled environments such as hospitals or rehabilitation centers. Though it may relieve some of the burden on an assistant, significant supervision is still required.

In light of the teachings of the prior there is room for improvement for providing a mobility assistance device which can adequately support a variety of up/down movements such as standing, jumping and squatting as well as supporting turning movements. Regular and independent movements should ideally take place from early childhood in order to secure both physical and cognitive development opportunities in the long term.In particular, the devices of the prior art typically still require an assistant to lift the user in case of squatting down to the ground, to help them change direction and/or to overcome an obstacle. This means that if a building such as a museum, cinema, sports centre or the like must be accessed by overcoming even one or two steps, the user of the device is effectively excluded due to the burden of overcoming the steps with a heavy device. Thus a great degree of independence cannot be provided.

In light of these difficulties, there exists a pressing need for improved mobility assistance devices which can support users, especially children with long-term conditions, in a wide range of activities without the need for close supervision or assistance.

### SUMMARY OF THE INVENTION

An objective of the present application was to overcome the disadvantages of the prior art and to provide an improved mobility assistance device which supports a wide range of postures and movements and is preferably adapted for use with children.

The problem is solved by the features of the independent claims. Preferred embodiments of the present invention are provided by the dependent claims.

The invention relates to a mobility assistance device comprising:
a set of wheels connected to each other by a frame,
a distal arm,
a proximal arm and
a first axis between the distal arm and the proximal arm
wherein the distal and the proximal arms are pivotably arranged about the first axis and are operatively connected to the frame,
wherein a harness for receiving a user is provided on the proximal arm at a length L₂ to the first axis,
wherein a counterweight is provided on a distal arm at a length L₁ to the first axis and wherein the counterweight and both of the lengths L₁ and L₂ are configured to at least partially compensate the weight of the user,
wherein the mobility assistance device further comprises a control unit and the set of wheels comprises at least two self-balancing wheels,
wherein the control unit is configured to control the self-balancing wheels in accordance with an inverse pendulum principle.

For the purposes of this application, a "seesaw" is preferably a first-class lever supported at a single fulcrum provided between two beam portions which may or may not be aligned with each other. The beam portions are each configured to carry a load. In this case, the first axis is the fulcrum and the proximal and distal arms are the beam portions. The loads comprise the counterweight and the harness carrying the user.

For the purposes of this application, a "harness" is preferably any means for securing and/or supporting a user to a device. This may include a seat, a belt, a set of straps, a rucksack-type arrangement, a wearable piece of clothing, an exoskeleton or the like.

For the purposes of the application, a "compensation of the weight of the user" preferably means providing an upward force acting on the centre of gravity of the user in a direction opposite to their weight force. This upward force is often referred to as the uplift force. The term "compensation of the weight of the user" is also used interchangeably in this application with the term "partial body weight support",
For the purposes of the application, a "set of wheels" comprises any number of wheels including at least two self-balancing wheels but may further include other wheels such as support wheels, suspension wheels and the like which may or may not rotate about the second axis.

The vertical axis z may be defined as being in the direction of gravity. This is also referred to in this application as an up-down direction or a vertical direction. The x axis may be defined as being in the direction in which a user walks. This is also referred to in this application as a forward-backward direction. The y axis may be defined as the longitudinal direction of the second axis about which the two self-balancing wheels rotate. This is also referred to in this application as a left-right direction or a sideways direction.

For the purposes of this application, a "self-balancing wheel" preferably functions as a wheeled inverted pendulum system. An example of such a system is known from the Segway patent US6302230B1.

In the present invention, each self-balancing wheel is preferably equipped with its own motor and its own set of sensors. Preferably each self-balancing wheel comprises its own controller which drives the motor on the basis of sensed data from the set of sensors. The center of gravity of a weight carried by each self-balancing wheel can be theoretically modelled as an inverted pendulum. In a wheeled inverted pendulum system, the speed, acceleration and direction of rotation of a motorized wheel are preferably controlled such as to prevent a pendulum extending vertically upwards from the wheel axis from tilting, swinging down and falling. When the pendulum is in a vertical position above the wheel axis, the wheeled inverted pendulum system is balanced. This vertical position is referred to as an unstable equilibrium position. This becomes a target position which the system aims to return to in case of any deviation of the pendulum's orientation.

A pendulum may begin tilting and falling ahead of or behind the wheel in an x-plane. The x-plane is preferably defined as spanning the x- and z-axes. The angle between the pendulum, the wheel's center and the vertical position in the x-plane is preferably detected by the set of sensors. The wheel drives in the direction in which the pendulum is tilting and falling, to prevent the fall and to bring the orientation of the pendulum back towards the vertical position.

In this case, the weight of the pendulum may comprise at least partially the weight of the self-balancing wheel itself, the weight of the frame and seesaw and the weight of the user. The user usually maintains contact with the ground separately from the wheels, wherein usually at least half of a user's foot is on the ground such that the user can intentionally influence the orientation of the pendulum. Furthermore, due to the contact with the ground, usually only a part of the user's weight contributes to the weight of the hypothetical inverted pendulum.

Preferably the self-balancing wheels can be controlled independently of each other in accordance with an inverse pendulum principle. As used herein the term "independent regulation of each of the self-balancing wheels according to an inverse pendulum principle" preferably means that each self-balancing wheel preferably functions as an independent wheeled inverted pendulum system. Additional overarching control methods and co-ordination between the wheels is hereby not excluded. Hence, the angular position of a falling pendulum in the x-plane is preferably detected by a set of sensors for each wheel and each wheel drives in the necessary direction and at the necessary speed to return the pendulum to the vertical position as described above.

Preferably the frame of the device is so configured that the angular position of the pendulum in the x-plane above each self-balancing wheel is varied when the user shifts their center of gravity laterally, i.e. in the y-plane. To achieve this, a frame carrying the seesaw may extend substantially upwards from a centre of rotation of each self-balancing wheel. An angle θ of the upwardly extending member of the frame from the vertical position may preferably be varied in the x-plane. Preferably the frame is so configured that the angle θ of an upwardly extending member of the frame may vary independently between one lateral side of the device and the other, such that the orientation of the pendulum in the x-plane may be different with respect to each self-balancing wheel. Each self-balancing wheel may then be actuated independently of the other to return the pendulum to its vertical position. Preferably, the direction in which the user turns laterally effects a smaller deviation in the angle θ of the frame member connected to the wheel positioned in the direction of the turn. A wheel on the other side of the user preferably has a larger angle θ to balance out. The self-balancing wheel having the lower angle θ preferably rotates more slowly in a forward direction or moves in a backward direction compared to the self-balancing wheel with the larger angle θ.

When two such self-balancing wheels are used in conjunction with one another, a turning action is preferably effected by a difference in speed or direction between the two wheels. The centers of the axes of rotation of the two self-balancing wheels are preferably kept equidistant by a frame joining them together. The radius of turning is thus preferably approximately zero.

Advantageously for the mobility device according to the invention, each self-balancing wheel may be provided as an off-the-shelf item. It may be preferable, as is typically the case with off-the-shelf self-balancing wheels, that each self-balancing wheel comprises its own set of sensors and its own processor housed within the wheel or within a wheel casing. Each wheel may also comprise a motor. Each processor may control the motor of the respective wheel according to the inverse pendulum principle, independently of the other wheel. The self-balancing wheels may alternatively be provided custom-designed, wherein either separate processors are provided for each wheel or a common processor allows for an independent regulation of each of the self-balancing wheels in accordance with an inverse pendulum principle . Additional or alternative processors may be used to provide the self-balancing wheels with some degree of dependence and/or to co-ordinate movement between them.

For the purposes of this application, a "control unit" preferably comprises one or more processors for regulating each of the self-balancing wheels based upon the data from sensors provided in said wheels in accordance with an inverse pendulum principle. Preferably, the control unit may comprise a first processor for a first self-balancing wheel and a second processor for a second self-balancing wheel, wherein each of the first and second processors preferably receives data from the set of sensors pertaining to the respective wheel, uses the sensed data to determine a corrective action required to maintain stability of the device and commands one or more wheel-motors to make the corrective action.

Preferably, the control unit may comprise a third processor configured to monitor the processors of each self-balancing wheel and to coordinate a corrective action between them. The third processor may preferably be configured to receive data from further sensors outside of the wheels and/or to command other actuators apart from the wheel motors to perform a command selected based on sensed data. Preferably, the third processor may be configured to detect a failure of one or both first and second processors and to bring the device safely to a stop if a failure is detected. The third processor may additionally or alternatively be configured to detect the speed of each self-balancing wheel, to compare the speeds of the self-balancing wheels and to limit a speed difference between them. This is especially useful to prevent accidents on slippery surfaces where one wheel fails to acquire sufficient traction, or to prevent accidents where one wheel is stuck. Alternatively, the control unit may only comprise a single processor that may control both self-balancing wheels independently in accordance with an inverse pendulum principle and co-ordinate a corrective action between them, if necessary.

The invention supports upward and downward movements of the user by means of the counterweight. The first axis allows the distal arm carrying the counterweight and the proximal arm carrying the user to function as a seesaw, lifting the user up or allowing them to lower themselves down intuitively. The harness partially lifted by the counterweight notably allows the user's hands to remain free and does not require a strong upper body with skilled arms and hands. In particular, the user does not need to use their hands to control the device in contrast to known devices. By freeing the user's hands, the user is free to take part in daily activities. This is especially important for children who need to learn and socialize by playing.

The harness is preferably configured to be forward-facing. That is, the user may be secured to the harness with the remainder of the device substantially behind them. An advantage of using a harness is that it can secure the user to the machine in a manner that is space-saving and compact, such that they can face their peers without a perceived physical "barrier". This is in contrast to known devices, in which the plethora of sensors are arranged in and around a large inflexible carrying arm for receiving the user. Furthermore, the use of a harness allows the device to be simply adaptable to the growth of a child as harness straps may be loosened or tightened as appropriate. Harnesses are easily replaced or adapted to changing requirements and due to their flexibility and variety can allow a wide range of unrestricted movement. This is especially important for children who often play with objects on the floor or crouch and/or crawl.

Due to the reduced strength, motor control, balance and posture control of children and those with weakened muscles, the reduction of the effective weight of the user significantly reduces the burden on their muscles. This allows the user to stay upright for much longer before exhaustion sets in. The user can thus take part in activities for longer, developing their experience of the world and improving their quality of life. The counterweight operates passively, that is, it does not require an active robotic lifting of the user. This also reduces the burden on the electrically powered components of the device such that the device may be used wirelessly for longer, e.g. outdoors, before being charged. This further opens wider opportunities for users to travel and share experiences with others.

The separation of the balance functions between the counterweight and the wheels also allows for a greater modularity whereby different parts of the device may be replaced as the user's needs develop. Preferably, any one or more of the harness, the counterweight, the self-balancing wheels and the support wheels are configured to be removable and replaceable by an adult without the need for specialist tools. The replaceable parts may preferably be securable to the frame or to the seesaw by means of Allen keys for example. This further improves the modularity and longevity of the device. Preferably, the positions of the counterweight and/or the support wheels with respect to the seesaw or the frame are also manually adjustable by an adult without the need for specialist tools.

The self-balancing wheels provide a further compact way to carry the frame including the harness in a forwards-backwards and left-right direction. As such, the device may assist the user not only by reducing their effective weight but by maintaining their balance regardless of the direction they walk in. The force required to move the device which includes the weight of the wheels, frame, arms and counterweight is kept minimal since the user need only move the pendulum out of an unstable equilibrium position to make the device move. The sensitivity of the device can be set such that this movement is minimal. The strength required to move forwards and backwards as well as to turn is thus reduced and kept safe by the device. As such, the active assistance of another person is no longer required, especially for turning.

The inverse pendulum principle used to control the self-balancing wheels provides a simple alternative to the more complex motorized solutions of the prior art. Balance can thus be achieved without requiring a great number of sensors for the various limbs. By using two self-balancing wheels, the size of the device may be reduced whilst maintaining a high degree of stability and at the same time exceeding in maneuverability. It is thus not necessary to increase the size of the device to four wheels which would lead to increasing the turning circle.

Furthermore, in the case of uneven ground - as is often found outdoors - using two self-balancing wheels provide an advantage over the prior art as they react quickly and automatically to sudden shifts in the user's center of gravity. As such, challenging terrains are also accommodated by the device. As the device does not require more than two self-balancing wheels, climbing stairs and overcoming obstacles and thresholds or the like is also facilitated.

It is preferable that the harness is configured for the user to face away from the device. As such, the wheels and counterweight follow the user from behind, allowing them more freedom to see ahead of them, to perform activities with their hands and feet and to interact with others without physical barriers.

In a preferred embodiment of the invention, the first axis is arranged at a height h₀ from the ground. The height h₀ is preferably between 0.6 and 1.2 m in the case of an adult. The height h₀ is preferably between 0.3 and 0.9 m in the case of a child. By arranging the first axis at a height h₀ from the ground, sufficient space is provided for rotation of the distal arm about the first axis without conflicts with the ground and/or lower parts of the frame. The height further provides space below the arm arrangement which allows an angle between the proximal and distal arms to be optimized.

The at least two self-balancing wheels are preferably configured to rotate about a second axis arranged at a height less than h₀ from the ground. Preferably the height of the second axis from the ground is between 0.05 and 0.4 m. The height of the second axis from the ground may depend on the size of an end user. Preferably, this height is between 0.05 - 0.2 m for a toddler or young child aged between 2-5 years, between 0.1 - 0.3 m for a child aged between 6-14 years and between 0.2 - 0.4 m for a teenager or adult aged 15 or over. The lower position of the wheel axis provides for a more stable base whereas the higher position of the first axis advantageously allows the distal arm to be made longer without conflicts with the ground or other parts when rotating. By extending the length L₁ of the distal arm, the moment applied by the same weight may be made greater. As such, more support may be provided to reduce the effective weight of the user without adding to the weight of the device as a whole.

Preferably the lengths L₁ and L₂ are approximations of the effective beam portion lengths of the seesaw. Theoretically, the length of the distal beam portion may be defined as the distance between the centre of gravity of the counterweight and the fulcrum (that is, the first axis). The theoretical length of the proximal beam portion may be defined as the distance between the centre of gravity of a user in the harness and the fulcrum respectively. Depending on the configuration of the harness and the way in which it is coupled to the proximal arm, it may not be the case that the length of the proximal arm corresponds exactly to the length of the theoretical proximal beam as the arm may stop short of the centre of gravity of the user. It is also possible that the proximal and/or distal arms do not extend in a straight line to the first axis. They may for example be non-linear or articulated. It is preferred that the length L₁ of the distal arm is the distance between the first axis and the point at which the arm is coupled to the counterweight. It is preferred that the length L₂ of the proximal arm is the distance between the first axis and the point at which the second arm is coupled to the harness. It should preferably be taken into account when setting the arm lengths L₁ and L₂ that the centre of gravity of a user varies with age, biological sex and development. Young children (2 - 5 years) tend to have centres of gravity around the height of their navel whereas adults tend to have centres of gravity in the pelvis.

A height difference Δh between the first and second axes influences the theoretical lever length and the pendulum moment acting on the self-balancing wheels. Increasing Δh increases the level of movement support in the forward direction. That is, the greater the height Δh and the distance of the forward shift, the longer the theoretical lever formed by the pendulum and the greater the moment acting about the second axis. Each self-balancing wheel moves forwards or backwards to balance out respectively a positive or negative angle θ of the pendulum from the vertical which is detected by the set of sensors. Lower forces are thus required to move the whole device forwards. It is preferred that Δh is between 0.25 - 1 m, more preferably between 0.3 - 0.6 m.

It is particularly preferable that h₀ is at or above the height of a user's centre of gravity when standing. It has been found that this results in a more intuitive and natural movement of the user. Such an arrangement also results in a more compact device.

In a further preferred embodiment of the invention, h₀ is greater than the length of L₁. This provides maximum space for the rotation of the distal arm about the first axis to create the required moments. The distal arm may as such be virtually vertical with the counterweight applying no moment at all when the user's centre of gravity is at a maximum height, such as when standing on tiptoes orjumping. The distal arm may also reach a virtually horizontal position when the centre of gravity of the user is as low as possible, leading to the counterweight applying the maximum moment to support the user in getting back up.

In a further preferred embodiment of the invention, h₀ is also greater than the length of L₂. The proximal arm may thus rotate over a wide range of positions while preventing falling and critically protecting the user's hips from landing on the ground. In the lowest position, a user may squat or crawl while being supported by the counterweight in getting back up. Additionally, as explained further below, a spring-loaded element, for example in a suspension wheel, may assist the user in getting back up from a low position.

The height h₀ is preferably adjustable. This may be achieved via a telescopic and/or pneumatic connection between the first axis and the frame. Preferably the frame is configured to increase h₀ by at least 10 cm, more preferably by at least 25 cm from a minimum height. The height may preferably be adjusted depending on the user's size such that the first axis remains at the same level or higher than the centre of gravity of the user. The lengths L₁ and L₂ may also be adjustable. The arms may comprise telescopically and/or pneumatically extendable portions. Preferably the arms are configured such that L₁ and L₂ are extendable by at least 10 cm, more preferably at least 25 cm. The position of the counterweight along the distal arm may also be adjusted manually or automatically to reduce or increase the level of support. Automatic adjustment of the position of the counterweight along the distal arm may be effected by an actuator and may preferably be configured to adjust the bodyweight support provided to the user in real time. This may be adjusted for example in relation to the user's position at a given moment.

The support required by a user may also vary over the course of a day, for example due to exhaustion setting in. Preferably this can be compensated for by the control system causing the actuator to move the counterweight further away from the first axis to increase body weight support.

The counterweight may preferably comprise a battery. Preferably the counterweight is configured to be replaceable and/or the distal arm is configured to have additional counterweights installed on it. The same device is thus adaptable for use by users of different sizes. This is especially advantageous in the case of children who may use the same device over the course of several years, during which their size, strength and motor skills may develop. This is also advantageous for users undergoing rehabilitation after an accident or illness, for example after an amputation. Over the course of the rehabilitation, the user's support needs may be reduced. This may be accommodated by removing excess counterweights from the device.

In a further preferred embodiment of the invention, the position of the first axis is shifted forwards in the direction of a user with respect to the second axis. Preferably the forward shift is between 0.2 - 6 cm, preferably 0.5 - 3 cm. Preferably the position of the first axis in the x-direction is configured to be adjustable such that it can be manually or automatically increased by at least 1 cm from a default position. Preferably a default forward shift is 2 cm in the x direction. By positioning the first axis not directly above the second axis but closer to the user, the centre of gravity of the device is shifted forwards. This is detected by the control unit of the self-balancing wheels, which attempts to compensate for the shift by moving forwards to bring the wheels directly under the centre of gravity of the pendulum. Preferably the forward shifted position of the first axis with respect to the second axis results in a default angle θ between an actual and an equilibrium position of the theoretical pendulum. The self-balancing wheels attempt to cancel out this angle θ by moving forwards. The device is thus generally biased towards forward motion, mimicking natural gait. This is especially advantageous in the case of children who tend towards inconsistent movement when their intention is to move forward. This may include spastic backward movements which due to the shifted position of the axes would not to be amplified. The shift between the axes is preferably adjustable, for example by means of an excenter or a slot in which the first axis is housed and fixed in a defined position.

Preferably, the angle between the proximal arm and the distal arm is fixed during use. This angle may be manually or automatically adjustable, e.g. to support different users of different sizes as well as changing the characteristics of the induced uplift force. In a preferred embodiment of the invention, the angular position of one or both of the proximal and distal arms is detected by an angular position sensor in the seesaw or by other types of sensors directly attached to one or both of the arms. This may be fed back to the control unit. In a further preferred embodiment of the invention, the seesaw may comprise a telescopic arc portion connecting the distal and proximal arms together such that the angle between them is adjustable. Preferably this telescopic portion is spring loaded with dampening elements to for example balance out abrupt movements enabling natural harmonic gait patterns.

In a further preferred embodiment of the invention, a ground-facing angle α formed between the distal and proximal arms is equal to or less than 180°, preferably between 90° - 180°, more preferably between 110° - 140°. Therefore, in a default position, preferably corresponding to a standing or walking position of the user, the distal arm tends to point downwards towards the ground. That is, a default ground-facing angle between the distal arm and the vertical is acute. This is in contrast to the known devices in which the distal arm tends to point away from the ground in the default upright position of the user. Advantageously, by fixing an angle α between the distal and proximal arms to be between 90° - 180°, the support provided by the counterweight may be maximized where needed, for example when the user crouches down to the ground. If the smallest angle α of 90° is chosen, the lowest position would result in an approximately vertical proximal arm and an approximately horizontal distal arm. At the horizontal position, the full weight of the counterweight acts orthogonally to the distal arm resulting in the maximum possible moment. This provides the user with maximum assistance in getting up. At the upright position of the user, assuming the height of the first axis is approximately level with the user's waist, the distal arm is close to being vertical. Only a very small component of the weight of the counterweight would then act orthogonally to the distal arm, resulting in a very low moment. The uplift force applied to the user is thus minimized when the user is already upright. At the same time, this arrangement allows for a high degree of space saving as the device may be kept compact.

When the greatest angle α of 180° is chosen, the whole length of the device becomes longer, spanning at least the sum of L₁ and L₂. The greatest uplift force would be provided when the user is in an upright position and the proximal and distal arms are approximately horizontal. A small variation in user height would also have a lower impact on the uplift force applied.

By analyzing various case studies, it was found that the angle α was most effective when set between 110° - 140°, particularly preferably between 120° - 130°. This will be explained below in more detail in light of the figures. It was found that in this range of angles, the size of the device could be made adequately compact while providing a stable uplift force which reacts sensitively enough to small height variations in the user. As such the user may be supported at all heights for all possible postures and movement types, including lifting the user from the ground. This eliminates to a large extent the role of the assistant required for lifting up the user as is the case in much of the prior art.

In a further preferred embodiment of the invention, the device is configured such that, when the user is in a standing position, an angle α₁ between the distal arm and a vertical is between 45° - 130°, an angle α₂ between the proximal arm and the vertical is 45° - 130°, wherein the sum α of α₁ and α₂ is not more than 180°. The height h₀ of the first axis is preferably set accordingly to allow unhindered rotation of both arms of the seesaw about the first axis. This provides for a compact device with a relatively small turning circle whilst maintaining an adequate uplift force from the seesaw. It is also advantageous that such angles allow the user free space behind their head and arms, allowing for unrestricted and natural movement.

In a further preferred embodiment of the invention, the device is configured such that the length L₂ is greater than the length L₁, wherein preferably L₁ is between 0.2 - 0.6 m, preferably 0.3 - 0.5, more preferably 0.35 - 0.45m and L₂ is between 0.25 and 0.75, preferably 0.3 - 0.6m, more preferably between 0.45 - 0.5 m. This was found to be particularly effective in reducing the effective weight of the user as the moment induced by the counterweight is increased relative to an opposing moment induced by the user's weight. A compact device is also achieved by these dimensions.

In a further preferred embodiment of the invention, the device further comprises a support wheel connected in a spring-loaded fashion below the proximal arm, the distal arm or the frame and configured to prevent the harness from uncontrolled falling during use. The spring-loading may be achieved mechanically via an element of a compression spring, tension spring, torsion spring or pneumatically. The support wheel may be a wheel suspended by a telescopic spring-loaded rod from the proximal arm, also referred to here as the suspension, such that the wheel would reach the ground before the harness if the proximal arm were to reach its lowermost angle. The wheel and suspension would not cause the user to stop abruptly as in the case of rods seen in the prior art but would soften their landing. The length of the suspension and its position along the proximal arm may be configured to set a lowermost position for the user. The length of the suspension is preferably between 5-40 cm, more preferably between 10 - 20 cm.

Alternatively or additionally, a wheel may be suspended in similar fashion from the distal arm to define a maximum upward position of the user. This may also be spring-loaded to avoid abrupt stopping of the user, e.g. while jumping upwards. A variety of other exemplary configurations of the support wheels are shown in the figures and described later on.

In a further preferred embodiment of the invention, the support wheel is positioned to allow the user to vary their height within a range corresponding to standing on tiptoes, walking, crouching and/or crawling. Advantageously, this allows the user maximum freedom and independence when using the device which only limits movements which are considered unsafe for the particular user. Preferably, the position of the support wheel is adjustable. This allows the device to grow with the user instead of being replaced.

In a further preferred embodiment of the invention, the counterweight has a mass between 5 - 30kg preferably between 5 - 20 kg, more preferably between 8 - 12 kg, even more preferably around 10 kg. Particularly with a length L₁ of between 0,35 - 0,45m, this weight provided an advantageous reduction in the effective weight of the user, especially in the case of a child.

In a further preferred embodiment of the invention, the position of the counterweight on the distal arm is automatically variable, such that L₁ may be varied. To this end the device may comprise an actuator for varying the position of the counterweight on the distal arm, For instance, the control unit may adjust the position of the counterweight, e.g. by sliding it along the distal arm by means of an actuator (electrical, pneumatic etc.), in accordance with a perceived intention of the user. For example, if sensors in the device detect that the user does not attempt to lift themselves up from a crouching position, the control unit may be configured to move the counterweight closer to the first axis to reduce the uplift force on the user, allowing them to continue to move according to their intention of remaining crouched. The counterweight may be moved further from the first axis to increase the moment applied to lift the user up if it is detected that they are reaching upwards, for example by tiptoeing or raising their arms.

In a further preferred embodiment of the invention, the at least two self-balancing wheels are negatively cambered at an angle between 5° - 20°. In the sense of the present application, a "negative camber" is preferably a setting of the wheels of the device to be closer together in the y-direction at the top than at the bottom. A "negative camber angle" β is preferably an angle between a center line passing from the top to the bottom of a wheel in the y-plane and the ground, wherein the angle faces the center of the device. Preferably the camber angle β is about 10°. This provides the device with a more stable shape having a wider base. Sideway tipping of the device is made virtually impossible by the cambering resulting in added safety in the case of uneven ground conditions and/or rough play with other children.

Terms such as substantially, approximately, about, etc. preferably describe a tolerance range of less than ± 20%, preferably less than ± 10%, especially preferably less than ± 5%, and especially less than ± 1%, and include the exact value.

In a further preferred embodiment of the invention, the frame is arranged on the outer sides of the wheels, leaving a gap between the wheels free. For example, the wheels may be connected to each other by a frame extending outwards from the centre of each wheel, defining the second axis. The frame may then also extend upwards and inwards towards the first axis. Such a frame may advantageously be used to carry the device. The space between the wheels is advantageously kept free for unrestricted movement of the seesaw and thereby of the user such as when running or crawling.

The frame may have a variety of configurations. Regardless of the particular configuration, it is preferable that the frame connects the at least two self-balancing wheels together such that their distance in the y direction is kept preferably equidistant as well as that the frame is tiltable about the second axis.

It is also preferable that the frame supports left and right turning of the seesaw with respect to the wheel axis, preferably by means of ball joints . Preferably the frame is configured to accommodate a different magnitude and direction of an angle θ between each of a left and right member of the frame and a vertical. The left and right members of the frame preferably each extend substantially upwardly from a center of rotation of a respective self-balancing wheel. The left and right members of the frame are preferably coupled by a suitable articulation to a transverse member of the frame which houses the first axis. It is especially preferable that the left and right members of the frame are coupled to the transverse member by means of ball joints. Preferably the ball joints comprise a slot to accommodate a change in the distance between upper extremes of the left and right members when the angles θ diverge from zero or from the default. That is, the transverse member may be slightly oversized for a default position of the frame where the left and right members extend vertically from the centers of rotation of the wheels. The oversized ends of the transverse member may thus advantageously be stored in the slot in the ball joint. When the user begins to turn left for example, the top of the left member of the frame may move backwards creating a negative angle to the vertical while the top of the right member of the frame moves forwards creating a positive angle to the vertical. The transverse member must thus span a longer distance between these two ends and the lengths of the transverse member housed in the slot are reduced. Preferably the difference in length is very slight, being no more than 3 mm for example.

Preferably the joints in the frame are configured to provide a pre-determined degree of resistance to movements leading to left and right turning. This may be effected pneumatically or mechanically. Preferably the resistance is adjustable manually or automatically by means of an actuator regulated by the control unit. This may advantageously reduce the sensitivity of the device such that involuntary movements in some users do not lead to unintentional turning.

Preferably the joints in the frame are configured to accommodate the optional negative cambering of the wheels. Ball joints have been found particularly suitable for this purpose.

In a further preferred embodiment of the invention, the harness is arranged pivotably with respect to the proximal arm, wherein a shock absorber is preferably provided between the harness and the proximal arm. A pivotable connection between the harness and the proximal arm allows the user to increase their range of unrestricted mobility as the angle of their hips or waist must not be kept constant with respect to the proximal arm. More natural movement patterns may thus be achieved. By providing a shock absorber between the harness and the proximal arm, for example a rubber, compressible pneumatic component or a compression, tension or torsion spring, a voluntary or involuntary backwards movement of the user's torso would not be abruptly stopped by the proximal arm.

In a further preferred embodiment of the invention, the control unit is configured to interpret a force applied by the user and to command the motors and/or actuators to suppress a force falling below a threshold force and/or applied for less than a threshold duration, wherein the threshold force and/or duration correspond to an involuntary movement. The control unit may thus be configured to filter out movements considered involuntary and not amplify these. This may be achieved by inputting data from various sensors to the control unit, for example data referring to conditions and positions of the user, movements of the seesaw or location of the frame, and/or data from the sensors of the self-balancing wheels. An algorithm may be used to interpret the sensed data, for example to filter and classify the sensed data. The control unit may be configured to send a command to one or more motors and/or actuators such as the motors of the self-balancing wheels, an actuator controlling the position of the counterweight, an angle between the distal and proximal arms of the seesaw, a stiffness in the ball joints and/or a stiffness of the suspension to move in accordance with the user's intention. Involuntary movements may be absorbed by the mechanical components of the device to avoid harsh stops. The control unit may advantageously only support the movements of the user which are considered to correspond with a particular intention so that the device moves the user further according to their intention. The user may rely less on their own muscle tone and exhaustion can be reduced.

In addition, the control unit may adapt electro-mechanical elements in such a way that this affects and changes intentionally the stiffness/resistance related to tilting the self-balancing wheels around the second axis. The control unit further may adapt the sensitivity of the sensors, and reaction times of the actuator elements including the self-balancing wheels.

In a further preferred embodiment of the invention, the control unit is configured to determine the position of the proximal and/or distal arms with respect to the vertical on the basis of data from one or more sensors and in response to the sensed data, to either suppress or propagate the movement of a user by adjusting the position of the counterweight, adjusting the speed and/or direction of the self-balancing wheels, and/or adjusting the stiffness of a connector between the support wheel and the frame. Advantageously, the control unit may support the user's movements in all directions whilst ignoring or counteracting signals interpreted as involuntary movements. An algorithm may be used to interpret the sensed data to determine whether a user's movement is classified as voluntary or involuntary. The control unit may preferably be programmed to store data corresponding to the user's movement patterns and learn which movements tend to be intentional for a particular user.

In a further preferred embodiment of the invention, the control unit is configured to interpret sensed data to determine whether a user's movement is voluntary and to propagate only voluntary movements, wherein the degree of propagation and/or suppression of the user's movement is preferably adjustable. By adjusting the degree of intervention, the user may be supported only as necessary for their particular case. Excess exhaustion may thus be avoided while allowing the user to safely practice exercising their own muscles and/or motor control.

As used herein, the "control unit" preferably refers to any computing device having a processor, a processor chip, a microprocessor or a microcontroller to allow for an automatic control of the components of device, such as the self-balancing wheels and/or potential actuators for adjusting the position of the counterweight, adjusting the stiffness of a connector between the support wheel and the frame etc. The components of the control unit may be conventional or custom-configured for the particular implementation. Preferably the control unit comprises a processor, a memory and computer code (software/firmware) for controlling the components of the device.

The control unit may also comprise a programmable printed circuit board, microcontroller, or other device for receiving and processing data signals from the components of the device, such as from sensors with respect to the position of self-balancing wheels or other sensory information in relation to angular position of the proximal and/or distal arm.

The control unit preferably further comprises a computer-usable or computer-readable medium, such as a hard disk, a random access memory (RAM), a read-only memory (ROM), a flash memory etc., on which a computer software or code is installed. The computer code or software to perform the control of the components of the device may be written in any programming language or model-based development environment, such as but not limited to C/C++, C#, Objective-C, Java, Basic/Visual Basic, MATLAB, Python, Simulink, StateFlow, Lab View, or assembler.

The software, and any functional descriptions of the software by description of controlling particular components or aspects of the device described herein, are considered technical features due to a direct physical output on the device. Functional descriptions of software may therefore be considered as preferred and defining embodiments of the invention. The particular computer code employed is available to a skilled person and may be constructed accordingly using standard knowledge.

The term "control unit is configured to" perform a certain operational step, such as determining the position of the proximal and/or distal arms with respect to the vertical and in response to the sensed data suppress or propagate the movement of a user by adjusting the position of the counterweight, adjusting the speed and/or direction of the self-balancing wheels, adjusting an angle α between the proximal and distal arms of the seesaw, adjusting a stiffness of the joints in the frame and/or adjusting the stiffness of a connector between the support wheel and the frame, may encompass a custom-designed or standard software installed on said control unit that initiates and regulates these operational steps.

In a preferred embodiment of the invention, an emergency stop button is provided at an accessible point on the device. This may cause the control device to stop any motorized movement and/or may cause a support wheel to drop to the ground. Preferably the emergency stop is located on an upper portion of the wheels or on top of the first axis such as to be easily visible and accessible to a nearby adult.

Depending on the needs and capabilities of the user, an emergency stop button may be provided on the harness or at such a point as to be operated by the user themselves.

The device of the invention may preferably also be configured for use with adults, teenagers or children who need not have any special mobility requirements. The device may preferably be adapted for use in leisure activities for example in hiking. This may substantially reduce exhaustion even in a healthy adult and reduce the risk of falls.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the apparatus within the scope of these claims and their equivalents be covered thereby.

Without intending to be limiting, the invention will be explained in more detail with reference to exemplary embodiments and the following figures:

### Brief description of the figures

- Fig. 1: Schematic illustration of a side-view of the Hibbot walking aid of the prior art, highlighting the seesaw arrangement.
- Fig. 2: Schematic illustration of a side-view of the mobility assistance device of the present invention, highlighting the see-saw arrangement.
- Fig. 3: Schematic illustration of a side-view of mobility assistance device according to the present invention with a first axis positioning slot and without support wheels.
- Fig. 4: Graphical illustration of the change of uplift forces with changing user height in the Hibbot walking aid of the prior art.
- Fig. 5: Graphical illustration of the change of uplift forces with changing user height in a mobility assistance device according to the present invention in which the angle α is 130°.
- Fig. 6: Illustration of a frontal view of a mobility assistance device according to a first embodiment of the present invention.
- Fig. 7: Illustration of a perspective view of the mobility assistance device according to the first embodiment of the present invention.
- Fig. 8: Illustration of a side view of the mobility assistance device according to a second embodiment of the present invention.
- Fig. 9: Illustration of a perspective view of the mobility assistance device according to the second embodiment of the present invention.
- Fig. 10: Illustration of a side view of the mobility assistance device according to a third embodiment of the present invention.
- Fig. 11: Illustration of a perspective view of the mobility assistance device according to the third embodiment of the present invention.
- Fig. 12: Illustration of a perspective view of the mobility assistance device according to a fourth embodiment of the present invention.
- Fig. 13: Illustration of a frontal view of the mobility assistance device according to the fourth embodiment of the present invention.
- Fig. 14: Illustration of a perspective view of the mobility assistance device according to a fifth embodiment of the present invention.
- Fig. 15: Schematic representation of the upward-downward forces acting on a user due to the see-saw mechanism of the mobility assistance device according to the invention.
- Fig. 16: Schematic representation of the forward-backward forces acting on a user due to the self-balancing wheels and the forward axial shift.
- Fig. 17: Schematic representation of a housing slot for the first axis in which the forward axial shift is adjustable.
- Fig. 18: Schematic representation of a top view of the self-balancing wheels and the user showing the forces applied to the device for the user to turn left.
- Fig. 19: Schematic representation of the axial forces acting on the device due to the forward axial shift.
- Fig. 20: Schematic representation of ball-jointed frame members defining the second axis and their positions when tilted backwards and forwards.
- Fig. 21A: Schematic representation of ball-jointed frame members defining the second axis and their positions when turning right and left.
- Fig. 21B: Schematic representation of a slotted ball-joint for accommodating left and right turning.
- Fig. 22: Side view of the mobility assistance device according to a sixth embodiment illustrating a user in a low, standing and high posture.
- Fig. 23: Perspective view of a three-dimensional model of the mobility assistance device according to a seventh embodiment in which the arms are not shown.
- Fig. 24: Rear view of the mobility assistance device according to the seventh embodiment in which the camber angle of the self-driving wheels is highlighted.

### Detailed description of the figures

The portion of the assistive mobility device acting as a seesaw will first be discussed conceptually in comparison with the prior art before proceeding to explain the features and dimensions of the device according to various preferred embodiments.

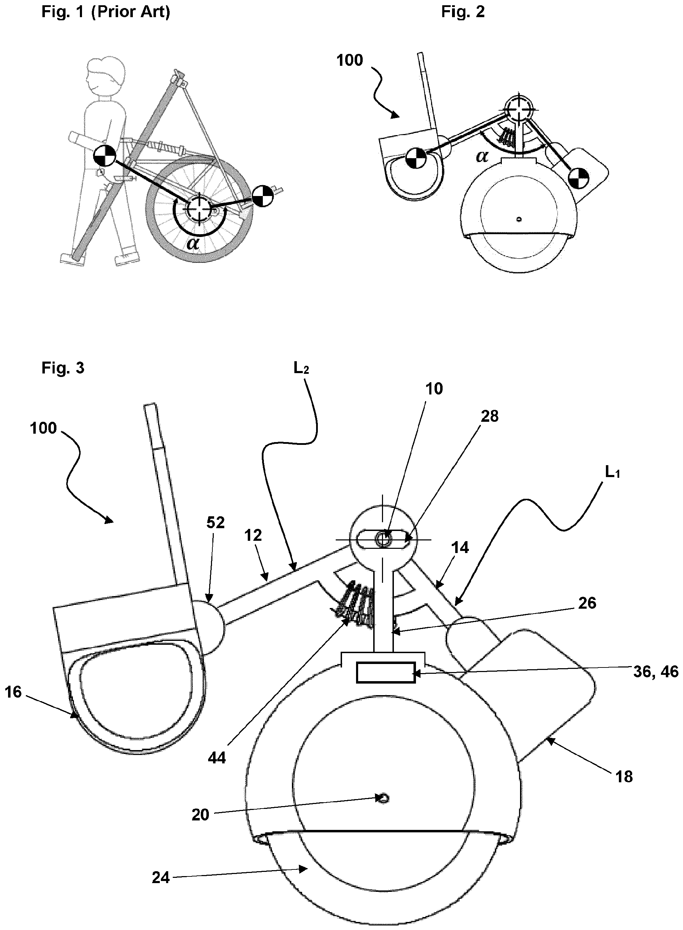

Figures 1 - 2 and 4-5 will first be discussed to compare the functioning of the seesaw of the present invention with the known prior art devices before moving onto explaining the different structural components of the invention with reference to Figure 3.

Figures 1 and 2 are simplified schematic illustrations of the Hibbot mobility device of the prior art and the device of the present invention respectively. In both devices a seesaw-style assembly can be identified. In both cases, the effective beam lengths extend from the centres of gravity of the counterweight and the user to the fulcrum. The seesaw beams form a lower angle which faces the ground in their default positions; that is in the position where a user is standing upright. This lower angle, hereinafter α, is highlighted by a curved arrow in each of Figures 1 and 2 for comparison. The angle α of the prior art is always shown as being greater than 180°. In contrast, the angle α of the present invention is preferably not greater than 180°.

The angle of the theoretical beam connecting the centre of gravity of the counterweight to the fulcrum dramatically influences the effective moment created by the weight. This is because the force of the weight acts vertically downwards due to gravity. However, depending on the angle, a greater or smaller component of this force will act orthogonally to the lever. As extreme cases, the full weight of the counterweight contributes to producing the moment when the beam is horizontal and none of the weight produces any moment when the beam is vertical. The greater the moment produced by the counterweight, the greater the uplift force produced acting on the user. The angle α of the present invention is selected not only to make for a more compact device but also to optimize the uplift force applied on the user in different positions.

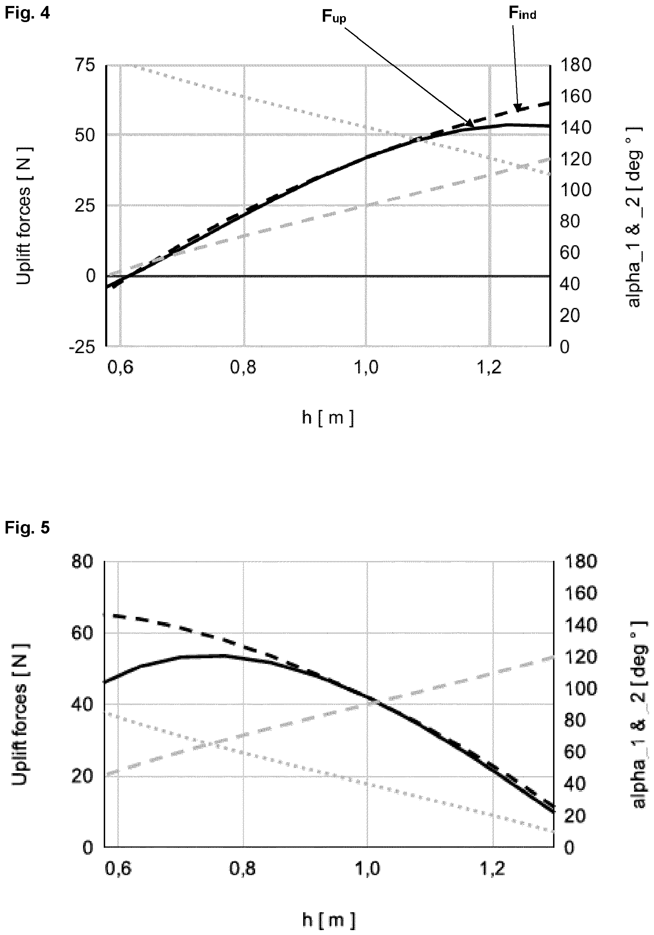

This is illustrated graphically in Figures 4 and 5 which compare the relationship between the uplift force and the height of the user's centre of gravity for different angles. In these figures, a straight dashed line represents a user-side angle α₂ and a dotted line represents a counterweight-side angle α₁, both read on the right hand y axis. α₂ becomes steadily smaller as the user crouches downwards whereas α₁ increases. The opposite is true when the user rises upwards. A dashed curve represents a total force acting on the user due to the moment caused by the counterweight and a solid curve represents an uplift force component acting on the user, wherein the forces in Newton are read on the left hand y axis. Fig. 4 illustrates a case study in which the angle α is 230°. Fig. 5 illustrates a case study in which α is 130°. In both cases a length L₁ from the fulcrum to the centre of gravity of the counterweight is 0,4 m and a length L₂ from the fulcrum to the centre of gravity of the user is 0,6 m. In Fig. 4, the effective uplift force acting on the user is at a maximum when the user is upright and is significantly lower or even negative when the user is closest to the ground. The implication of this is that such a device cannot support a user in getting up again after reaching down to the ground. The assistance of a care-giver is typically required.

On the other hand, as illustrated in Fig. 5, when the angle α is selected at 130°, the uplift force acting on the user increases as the centre of gravity of the user sinks lower, thereby assisting the user in returning to an upright position. This teaching has been exploited to optimize the angles and dimensions selected for the seesaw mechanism of the invention.

Turning now to Fig. 3, the structure of a mobility assistance device **100** according to the invention may be studied in more detail. The device comprises a frame **26** which may preferably be made of extruded aluminum for strength and weight-saving. The frame **26** connects the main parts of the device with each other and may advantageously comprise telescopic portions enabling the overall dimensions of the device to be adapted to the changing needs of a growing child or to different users. The frame joins a set of wheels, in this case two self-balancing wheels **22** and **24** to a first axis **10** which acts as the fulcrum of the seesaw. The self-balancing wheels are configured to rotate about a second axis **20,** below the first axis. The first axis **10** joins two arms together: a proximal arm **12** and a distal arm **14.** The ground-facing angle α between these two arms is preferably fixed at a value up to 180°. The angle may also be adjusted by means of an arcuate telescopic portion **44** of the frame connecting the two arms together. In this embodiment, the arc connector is additionally spring-loaded. The proximal arm **12** is connected to a harness **16** configured to carry a user. A coupling **52** connects the harness to the user. Preferably this coupling comprises a shock absorber. The coupling **52** may also preferably be articulated within a limited range of angles. The distal arm **14** is connected to a counterweight **18** configured to at least partially compensate the weight of the user.

The length of the proximal arm between the first axis **10** and a point at which it is coupled to the harness **16** can be used as an approximation of a theoretical beam length between the first axis and the position of a user's centre of gravity when in the harness **16.** The length of the proximal arm is given the reference **L₂.** In the case where the proximal arm does not extend to the user's centre of gravity, **L₂** is the physical length of the arm **12** and is a mere approximation of the theoretical length to be taken into account when calculating the moments acting on the seesaw. The length of the distal arm between the first axis **10** and the counterweight **18,** preferably more precisely defined as the length from the first axis to the centre of gravity of the counterweight **18** is referred to as **L₁.**

It is preferable in some embodiments that the first axis **10** is shifted forward with respect to the second axis **20.** That is, the two axes need not be vertically aligned. The forward shift may be adjusted by housing the first axis **10** in a slot spanning portions of the frame **26.** This slot is illustrated as **28** and may be configured for manual adjustment of the horizontal position of the first axis. It is also preferable that the angular position of the proximal and/or distal arm is monitored by an angle sensor. Data from the angle sensor may be fed to a control unit **36** to assist in propagating a voluntary movement of the user or to return the user to a default upright position for example.

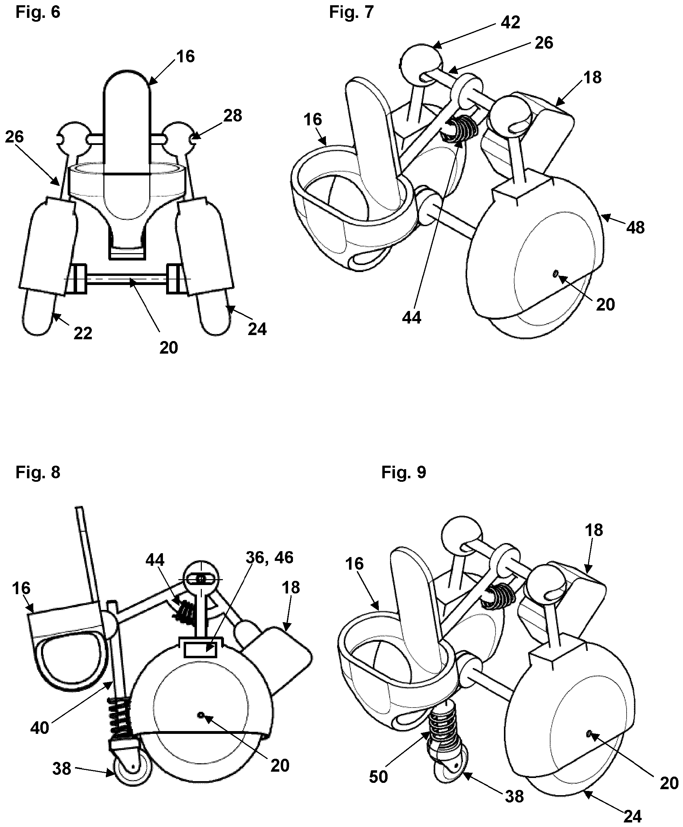

Figures 6 to 14 show a variety of different structural arrangements of the mobility assistive device of the invention wherein particularly the frame **26** is adapted to different user needs.

Figures 6 and 7 show a frontal and perspective view of the mobility assistance device according to a first embodiment of the invention. Notably in this embodiment, no support wheel **38** has been included making this particular embodiment suited for a user with low risk of falling. The device may mainly be used to reduce exhaustion in such a user while maximizing the range of movement. The additional support wheel and other optional features may be included in this and any of the further embodiments disclosed herein, in a variety of positions and arrangements.

The harness **16** of the first embodiment comprises a bucket-type seat and a backrest. The type of harness may be selected depending on the size and needs of the user. Preferably, the harness is padded. Two self-driving wheels are used which are joined together along the second axis **20** by a part of the frame **26.** An upper part of the frame joining the wheels to the first axis comprises ball joints each equipped with a slot for adjustment of the position of the first axis. The whole device including the counterweight **18,** the frame **26** and the wheels **22** and **24** is configured to follow a user from behind such that the forward direction is the direction of the harness. This provides the user with greater freedom and stability.

Figures 8 and 9 show respectively a side and perspective view of a mobility assistance device according to a second embodiment of the invention. The device has a similar structure to that of the first embodiment with the exception that a support wheel **38** is included connected by a spring-loaded frame member **40** to the proximal arm **12.** The length of the connector **40** has been set in this case to touch the floor as soon as the user's centre of gravity falls below a range considered normal for walking or standing. This causes the spring-loaded member to be slowly compressed such that the descent of the user is controlled to a gradual stop. This reduces shock and discomfort to the user, preventing risk of injury. Such a configuration of the support wheel may be particularly suited to a user whose motor skills do not allow safe crouching or crawling followed by getting back up, such that any significant drop in the user's centre of gravity is interpreted as a fall and prevented by the support wheel. The length and position of the connector **40** may preferably be adjustable according to the user's needs. Shortening the length of **40** would allow the user to come closer to the ground without intervention from the device.

In this particular embodiment, a mechanical compression spring **50** is used to absorb shock when the support wheel **38** reaches the ground. Other arrangements using tension or torsion springs or further alternatives such as a pneumatic or hydraulic system may also be used.

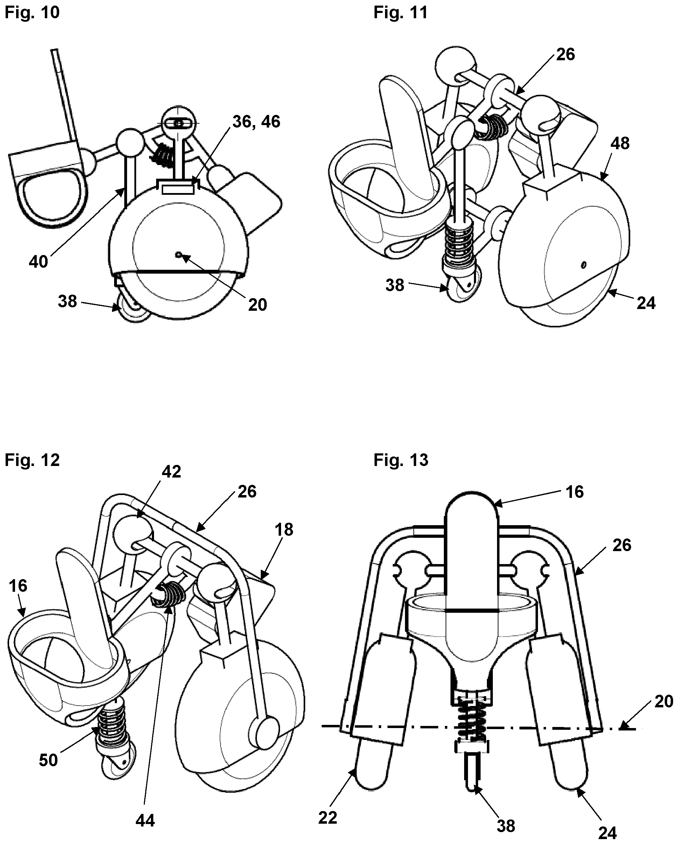

Figures 10 and 11 show respectively a side view and a perspective view of a mobility assistance device according to a third embodiment of the invention. In this embodiment, the support wheel **38** is positioned substantially between the two self-driving wheels **22** and **24,** leaving the floor space immediately behind the harness clear for the user to move their legs without conflicts with the device. Figure 10 also shows schematically the preferred position of a set of wheel sensors **46** in a casing **48** of the self-driving wheels.

Figures 12 and 13 show respectively a perspective and frontal view of a mobility assistance device according to a fourth embodiment of the invention. This is structurally similar to the first, second and third embodiments with the exception that the frame **26** does not join the wheels directly along the second axis but extends outwardly from the self-driving wheels and up to form a handle member of the frame. This arrangement is particularly advantageous as it leaves the space between the wheels free for the user. Fewer components on the underside of the device also allows for greater simplicity and for a lower likelihood of objects or ground imperfections to get in the way of the device. An optional support wheel **38** is included in this embodiment. The wheel suspends from an end of the proximal arm **12** close to the harness.

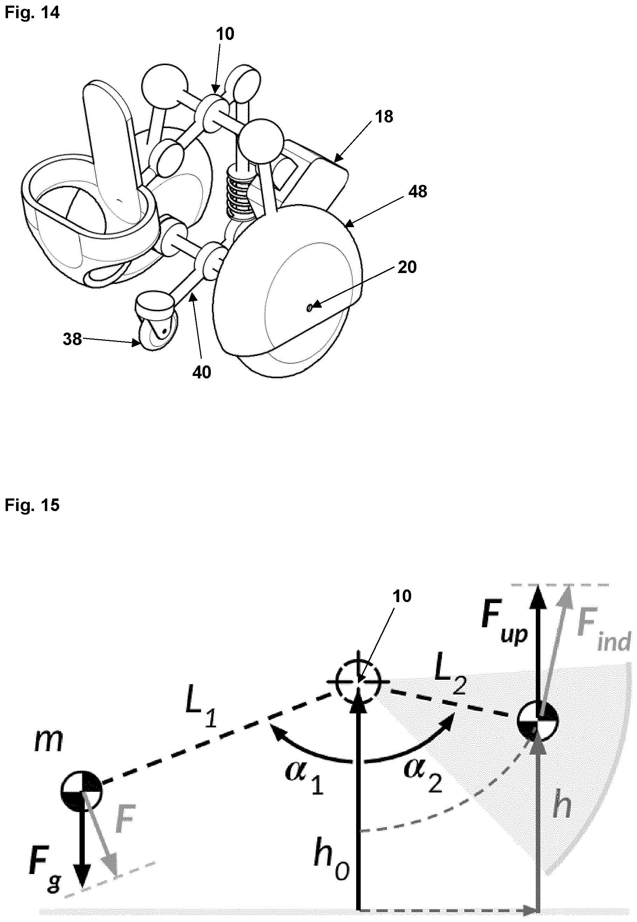

Figure 14 shows a perspective view of a further frame arrangement according to a fifth embodiment of the invention. This embodiment comprises two support wheels **38:** one suspended from the distal arm **14** and another arranged on a member of the frame **26** connecting the two self-balancing wheels.

Regardless of the structural arrangement of the mobility assistance device, it is preferred that a set of wheel sensors **46** are housed in a casing **48** of the self-driving wheels. Each self-driving wheel may have its own independent set of sensors. These may include a gyroscope, an accelerometer and/or a magnetometer. An angular position sensor may be provided in an arc portion of the frame **26** between the distal and proximal arms to measure their angular position. The harness may further comprise a strain gauge and/or a pressure sensor, for example in the back rest, to identify a leaning posture of the user which may be interpreted as a desire to move backward. The harness may alternatively or additionally comprise strain gauges or pressure sensors in the sides to identify a user's intention to turn left or right. An optional strain gauge or pressure sensor in a groin portion of the harness may identify a user's vertical posture, for example as standing on tiptoes.

Data from the sensors may be fed to a control unit **36.** This may be housed anywhere on the device. As an example, it may be housed in the wheel casing along with the sensors as shown in Fig. 3. In all embodiments, the control unit **36** may be configured to interpret whether sensed data corresponds to voluntary or involuntary movements from the user. Preferably a force and/or duration threshold may be used to classify sensed movements. A stronger movement which is sustained for longer may be interpreted as voluntary. The control unit **36** may be configured to adjust various device parameters to support a movement considered involuntary and to suppress or ignore involuntary movements. For example, the position of the counterweight 18 along the distal arm may be adjusted by a motor controlled by the control unit to adapt the uplift force to the user's intention.

Figures 15 to 18 show conceptually the forces acting on the user due to the mobility assistive device.

Figure 15 represents a conceptual analysis of the forces acting on a user in a default position due to the seesaw assembly. This includes the counterweight **18,** the distal arm **14,** the first axis **10,** the proximal arm **12** and the harness **16.** The first axis **10** is provided at a height **h₀** from a supporting surface such as the ground. The arms are arranged to form a fixed ground-facing angle **α** between them, wherein α may be divided into **α₁** and **α₂** by the vertical line passing through the first axis **10.** The centre of gravity of the counterweight is shown as **m** in Fig. 15. Counterweight **m** is disposed at a length **L₁** from the first axis and its weight **F_{g}** acts directly downwards. When **α₁** is less than 90°, a component **F** of the weight force **F_{g}** acts orthogonally to the distal arm. A moment acting on the first axis **10** due to the counterweight is then **F** x **L₁.** Fig. 15 also represents a user by their centre of gravity. In a default position, the user is upright and their centre of gravity is at a height **h** from the ground wherein **h** is less than **h₀.** By default, the proximal arm is at an angle α₂ from the vertical. The moment **F** x **L₁** results in a force **F_{ind}** acting orthogonally to the proximal arm. A component **Fᵤₚ** of this force acts on the user, wherein **Fᵤₚ** can be calculated as **F_{ind}** x Sin(α₂)°.

The range of heights which the centre of gravity of the user may take may be limited by a support wheel or otherwise. This range of heights is highlighted in Fig. 15. The angular position of the proximal arm may thus span this highlighted sector. The dimensions and angles used for the seesaw assembly may be configured to take this into account.

Several case studies have been used to optimize the dimensions of the mobility assistance device for a user who is a child with cerebral palsy. It was found that the total angle α was best selected to be between 90° and 180°, more preferably between 120° and 140°, even more preferably between 120° and 130°.

In a first case (high uplift with little height variation) it was found that the seesaw could be made more sensitive by setting α at 130°, **L₁** at 0.6 m and **L₂** at 0.2 m. The height of the first axis h₀ was 1 m. The mass of the counterweight was 10 kg. It was found that at these dimensions, the weight of the child could be effectively compensated such that a small lowering in the height of the child's centre of gravity resulted in a large uplift force bringing the child back up.

In a second case (low uplift with large height variation) it was found that the range of movements of the child could be increased while reducing the uplift force when the mass of the counterweight was 10 kg. The length **L₁** was set at 0.4 m, **L₂** at 0.6 m and the angle α at 120°. The variation of uplift force with the user's vertical position in this case was gentler. These dimensions were therefore more suitable for a child with greater muscle strength for which less mechanical intervention was required.

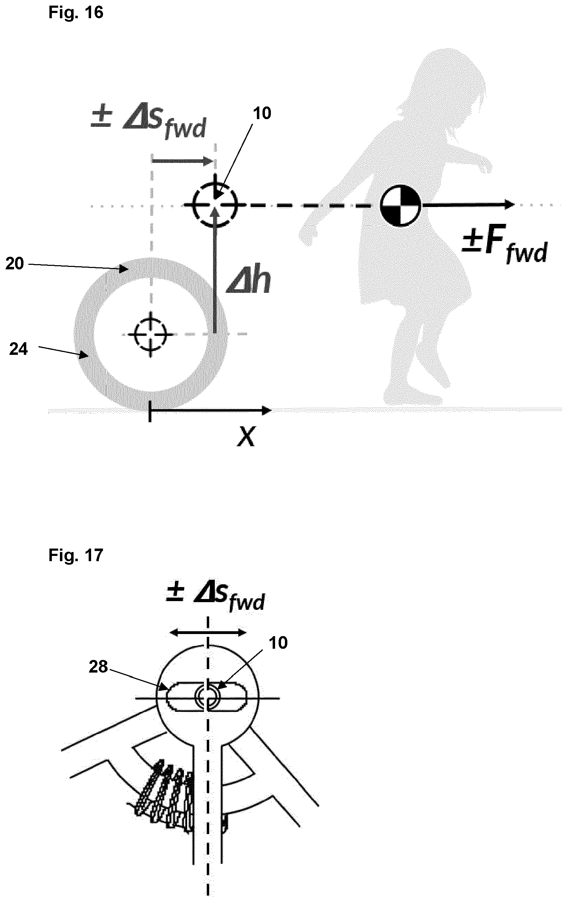

Fig. 16 illustrates the relative positions of the first and second axes. The rest of the seesaw is not shown. The first axis is positioned at a height **Δh** above the second axis. Preferably, the first axis is also shifted forwards in the x direction with respect to the second axis by +/-Δs_fwd. This results in the centre of gravity of the seesaw being ahead of the second axis, resulting in a moment about the second axis. The size of the moment depends on the weight of the seesaw, the height difference **Δh** and the shift in the x direction Δs_fwd. The angle **θ** may be adjustable by moving the position of the first axis horizontally, for example by means of a housing slot as shown in Fig. 17.

The self-balancing wheels operate as a wheeled inverted pendulum system. A set of sensors **46** in each self-balancing wheel detect the shift of the centre of gravity from the a vertical line passing through the center of rotation of each wheel. The wheels maintain the balance of the system by steering into the shift, that is by moving forwards. The device is therefore biased towards moving forwards.

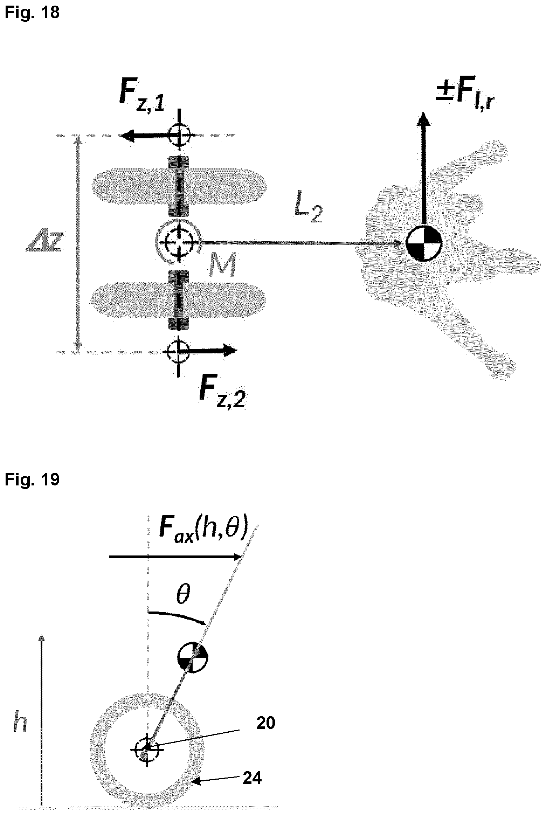

Fig. 18 illustrates conceptually the forces acting on a user during turning of the device. The user begins turning left by applying a force against the left side of the harness. This may be sensed by a sensor and propagated if considered voluntary by the control unit. The force applied by the user creates a moment **M** via the length **L₂** of the proximal arm acting on the centre point of the device preferably aligned with the z axis. The turning moment tilts the self-balancing wheels in opposite directions each of which are within their x plane as defined above, inducing rotations of the wheels correspondingly as a counteractive action, thus causing the device to move around as a whole.

Fig. 19 illustrates the force required to tilt a self-balancing wheel by an angle **θ** out of the vertical position. The force is a function of the height. It can thus be appreciated that the height of the first axis with respect to the second axis has a direct effect on the sensitivity of the system.

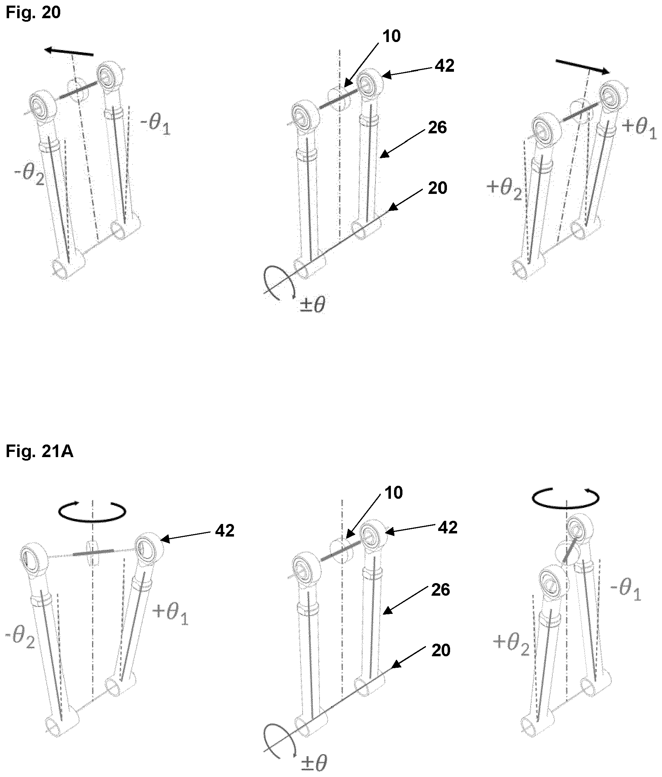

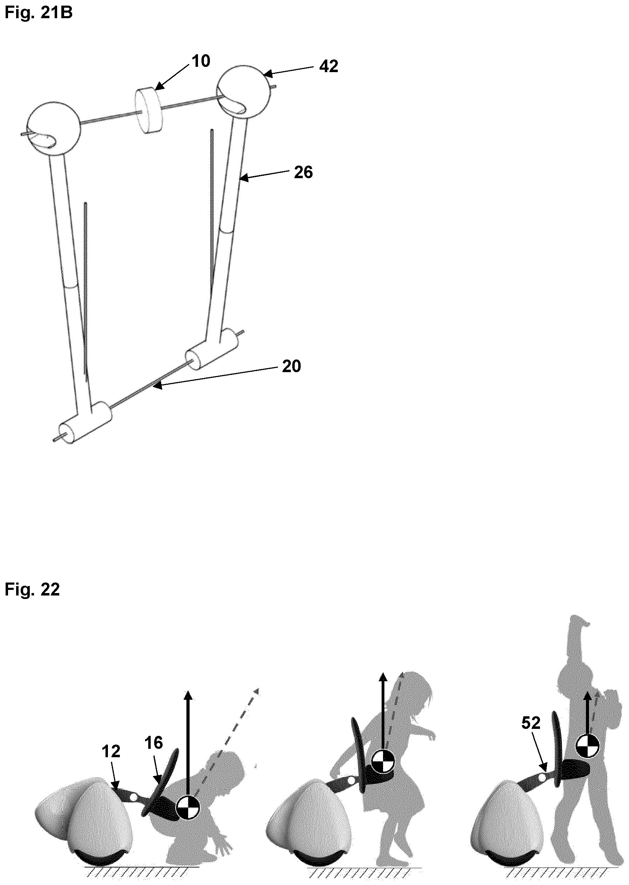

The self-balancing wheels may be joined together by the frame **26.** Figures 20 and 21 illustrate a preferred embodiment of frame members (also referred to herein as frame portions) connecting the second axis of the self-balancing wheels to the first axis. In Fig. 20, a tilting function of the frame is shown. Here, an upper member of the frame **26** comprising the first axis may be shifted backwards and forwards by an angle **θ** with respect to the second wheel axis. When tilting, the angle **θ₁** and **θ₂** formed by a left and right member of the frame respectively is equal and in the same direction for both members.

In Fig. 21A, a turning function of the frame is illustrated. In this case, the angles **θ₁** and **θ₂** are only equal in value if both left and right members are equidistant to the centre point of the device. The directions of the two angles are however opposite to each other. To allow the user to make such a turn while the wheels remain in position, it is preferable to use ball joints at an upper end of the left and right members. The left and right members may be connected via a transverse frame member to the first axis which is halfway between them. This allows the seesaw to follow the user when the user turns so that the centre of gravity of the device including the user causes a moment about the centre of the device. The self-balancing wheels may then follow by turning about the centre point preferably aligned with the z axis, shown by a dashed line, and realigning themselves. Since the wheels turn around one point, the turning circle of the device is kept minimal. This saves space and allows the device to be easily maneuverable indoors and outdoors.

Fig. 21B shows a preferred embodiment of the ball joints in which a slot is provided to accommodate a differing distance between the left and right frame members when a user begins to turn right.

Fig. 22 illustrates a mobility assistance device according to a sixth preferred embodiment in which the self-driving wheels are encased, preferably leaving only a small portion of the wheel exposed. In this embodiment, the frame, distal arm and counterweight are also almost entirely encased. The proximal arm is left free to provide the user with more space. By encasing the device where possible, the safety may be improved, especially in the case of children interacting with each other. The smooth outer surface reduces the likelihood that any clothes, toys or other objects may be trapped in the narrow spaces or articulated parts of the device.

In the sixth embodiment, the proximal arm is also articulated at or close to the point where the harness is attached. This allows the position of the harness, for example a seat, to be adjusted for the user. It may also allow the user to position their back freely at an angle to the proximal arm. That is, when moving downwards, they must not also be facing the ground but may retain a natural posture. It is also particularly preferable that the linkage 52 between the harness and the proximal arm comprises a shock absorber, for example a rubber shock absorber.

Although not shown in this illustration, an emergency stop button is provided at an accessible point on the device. Preferably the emergency stop is located on an upper portion of the wheels or on top of the first axis such as to be easily visible and accessible to a nearby adult.

The control unit may be configured to activate an emergency stop sequence when the emergency stop button is pressed. Preferably this causes the control device to immediately or gradually stop any motorized movement and/or may cause a support wheel to drop to the ground.

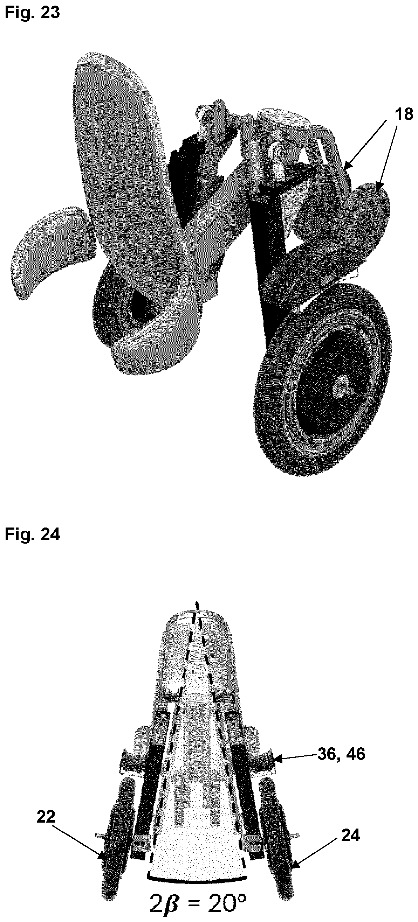

Finally, the Figures 23 and 24 illustrate a perspective and rear view of a mobility assistance device according to a seventh embodiment of the invention. For visibility, not all parts are shown in these figures. In this embodiment, the wheels are negatively cambered by 10° such that the upper angle formed by a theoretical triangle spanning the ground and a centre line of each wheel is 20°. An inner angle β between the centre line of each wheel and the ground is thus about 10°. It was found that this angle significantly increased the stability of the device and its safety.

### LIST OF REFERENCE SIGNS

- 100: Mobility Assistance Device
- 10: First Axis
- 20: Second Axis
- L1: Length from First Axis to Counterweight
- L2: Length from First Axis to Harness
- 12: Proximal Arm
- 14: Distal Arm
- 16: Harness
- 18: Counterweight
- 22: First Self-Balancing Wheel
- 24: Second Self-Balancing Wheel
- 26: Frame
- 28: Slot for Forward Shift Adjustment
- 30: Set of Wheels
- 32: User
- 34: User's Centre of Gravity
- 36: Control Unit
- 38: Support wheel
- 40: Support wheel Frame Connector
- 42: Ball Joint
- 44: Angle Adjustment Frame Connector
- 46: Set of Sensors
- 48: Wheel Casing
- 50: Spring
- 52: Harness-Arm Coupling

## Claims

1. A mobility assistance device (100) comprising:
a set of wheels (30) connected to each other by a frame (26),
a distal arm (14),
a proximal arm (12) and
a first axis (10) between the distal arm (14) and the proximal arm (12)
wherein the distal and the proximal arms are pivotably arranged about the first axis (10) and are operatively connected to the frame (26),
wherein a harness (16) for receiving a user (32) is provided on the proximal arm (12) at a length L₂ to the first axis (10),
wherein a counterweight (18) is provided on a distal arm (14) at a length L₁ to the first axis (10) and wherein the counterweight (18) and both of the lengths L₁ and L₂ are configured to at least partially compensate the weight of the user (32),
**characterized in that**
the mobility assistance device (100) further comprises a control unit (36) and the set of wheels comprises at least two self-balancing wheels (22, 24),
wherein the control unit (36) is configured to control the self-balancing wheels in accordance with an inverse pendulum principle.

2. The mobility assistance device (100) of claim 1, wherein the first axis (10) is arranged at a height h₀ from a ground and the at least two self-balancing wheels (22, 24) are configured to rotate about a second axis (20) arranged at a height less than h₀ from the ground, wherein h₀ is preferably between 0.3 - 1.2 m and a height difference Δh between the first and second axes is preferably at least 0.25 m.

3. The mobility assistance device (100) according to claim 2, wherein the position of the first axis (10) is shifted forwards in the direction of a user (32) with respect to the second axis (20), preferably by 0.2 - 6 cm, wherein preferably the shift between the axes is adjustable by means of a slot (28) in which the first axis (10) is housed.

4. The mobility assistance device (100) according to any of the previous claims, wherein a ground-facing angle α formed between the distal (14) and proximal arm (12) is equal to or less than 180°, preferably between 90° - 180°, more preferably between 120° - 140°.

5. The mobility assistance device (100) according to any of the previous claims, wherein the device further comprises a support wheel (38) connected in a spring-loaded fashion below the proximal arm (12), the distal arm (14) or the frame (26) and configured to prevent the harness from uncontrolled falling during use.

6. The mobility assistance device (100) of claim 5, wherein the support wheel (38) is positioned to allow the user (32) to vary their height within a range corresponding to standing on tip-toes, walking, crouching and/or crawling.

7. The mobility assistance device (100) according to any of the previous claims, wherein the counterweight (18) has a mass between 5 - 30 kg preferably between 8 - 12 kg.

8. The mobility assistance device (100) according to any of the previous claims, wherein the position of the counterweight (18) on the distal arm (14) is automatically variable, preferably such that L₁ may be varied by at least +/-1 cm.

9. The mobility assistance device (100) according to any of the previous claims, wherein the frame (26) is arranged on outer sides of the wheels (30), leaving a gap between the wheels free.

10. The mobility assistance device (100) according to any of the previous claims, wherein the harness (16) is connected pivotably to the proximal arm (12), wherein a shock absorber is preferably provided between the harness (16) and the proximal arm (12).

11. The mobility assistance device (100) according to any of the previous claims, wherein the frame (26) comprises a left member and a right member coupled by means of ball joints (42) to a transversal member housing the first axis (10), wherein the ball joints preferably comprise a slot configured to accommodate a change of distance between the left and right members.

12. The mobility assistance device (100) according to any of the previous claims, wherein the control unit (36) is configured to interpret a force applied by the user and to command a motor and/or actuator to suppress or ignore the force if detected as being below a threshold force and/or is applied for less than a threshold duration, wherein the threshold force and/or duration correspond to an involuntary movement.

13. The mobility assistance device (100) according to any of the previous claims, wherein the control unit is (36) configured to determine the position of the proximal (12) and/or distal arms (14) with respect to the vertical based on data from a sensor, and in response to the sensed data, to either suppress or propagate the movement of a user (32) by adjusting the position of the counterweight (18), adjusting an angle α between the proximal and distal arms, adjusting a stiffness in one or more frame joints, adjusting the speed and/or direction of the self-balancing wheels (22, 24), and/or adjusting the stiffness of a connector (40) between the support wheel and the frame.

14. The mobility assistance device (100) according to the previous claim, wherein the control unit (36) is configured to interpret sensed data to determine whether a user's movement is voluntary and to propagate only voluntary movements, wherein the degree of propagation and/or suppression of the user's movement is preferably adjustable.

## Patentansprüche

1. Mobilitätshilfevorrichtung (100), umfassend:
einen Satz Räder (30), die durch einen Rahmen (26) miteinander verbunden sind,
einen distalen Arm (14),
einen proximalen Arm (12) und
eine erste Achse (10) zwischen dem distalen Arm (14) und dem proximalen Arm (12), wobei der distale und der proximale Arm schwenkbar um die erste Achse (10) angeordnet und mit dem Rahmen (26) wirkverbunden sind,
wobei ein Gurtzeug (16) zum Aufnehmen eines Benutzers (32) an dem proximalen Arm (12) in einer Länge L₂ zu der ersten Achse (10) bereitgestellt ist,
wobei ein Gegengewicht (18) an einem distalen Arm (14) in einer Länge L₁ zu der ersten Achse (10) bereitgestellt ist und wobei das Gegengewicht (18) und beide der Längen L₁ und L₂ dazu konfiguriert sind, das Gewicht des Benutzers (32) mindestens teilweise zu kompensieren,
**dadurch gekennzeichnet, dass**
die Mobilitätshilfevorrichtung (100) ferner eine Steuereinheit (36) umfasst und der Satz Räder mindestens zwei selbstausgleichende Räder (22, 24) umfasst,
wobei die Steuereinheit (36) dazu konfiguriert ist, die selbstausgleichenden Räder gemäß einem inversen Pendelprinzip zu steuern.

2. Mobilitätshilfevorrichtung (100) nach Anspruch 1, wobei die erste Achse (10) in einer Höhe h₀ von einem Boden angeordnet ist und die mindestens zwei selbstausgleichenden Räder (22, 24) dazu konfiguriert sind, sich um eine zweite Achse (20) zu drehen, die in einer Höhe kleiner als h₀ von dem Boden angeordnet ist, wobei h₀ vorzugsweise zwischen 0,3-1,2 m beträgt und eine Höhendifferenz Δh zwischen der ersten und zweiten Achse vorzugsweise mindestens 0,25 m beträgt.

3. Mobilitätshilfevorrichtung (100) nach Anspruch 2, wobei die Position der ersten Achse (10) in Richtung eines Benutzers (32) in Bezug auf die zweite Achse (20) nach vorne verschoben ist, vorzugsweise um 0,2-6 cm, wobei vorzugsweise die Verschiebung zwischen den Achsen durch ein Langloch (28) einstellbar ist, in dem die erste Achse (10) untergebracht ist.

4. Mobilitätshilfevorrichtung (100) nach einem der vorhergehenden Ansprüche, wobei ein bodenzugewandter Winkel α, der zwischen dem distalen (14) und proximalen Arm (12) gebildet ist, gleich oder kleiner als 180°, vorzugsweise zwischen 90°-180°, bevorzugter zwischen 120°-140° ist.

5. Mobilitätshilfevorrichtung (100) nach einem der vorhergehenden Ansprüche, wobei die Vorrichtung ferner ein Stützrad (38) umfasst, das unter Federspannung unterhalb des proximalen Arms (12), des distalen Arms (14) oder des Rahmens (26) verbunden und dazu konfiguriert ist, ein unkontrolliertes Fallen des Gurtzeugs während des Gebrauchs zu verhindern.

6. Mobilitätshilfevorrichtung (100) nach Anspruch 5, wobei das Stützrad (38) so positioniert ist, dass es dem Benutzer (32) ermöglicht, seine Höhe in einem Bereich zu variieren, der dem Stehen auf Zehenspitzen, Gehen, Kauern und/oder Kriechen entspricht.

7. Mobilitätshilfevorrichtung (100) nach einem der vorhergehenden Ansprüche, wobei das Gegengewicht (18) eine Masse zwischen 5-30 kg, vorzugsweise zwischen 8-12 kg, aufweist.

8. Mobilitätshilfevorrichtung (100) nach einem der vorhergehenden Ansprüche, wobei die Position des Gegengewichts (18) am distalen Arm (14) automatisch variierbar ist, vorzugsweise derart, dass L₁ um mindestens +/- 1 cm variiert werden kann.

9. Mobilitätshilfevorrichtung (100) nach einem der vorhergehenden Ansprüche, wobei der Rahmen (26) an Außenseiten der Räder (30) angeordnet ist, sodass ein Spalt zwischen den Rädern frei bleibt.

10. Mobilitätshilfevorrichtung (100) nach einem der vorhergehenden Ansprüche, wobei das Gurtzeug (16) schwenkbar mit dem proximalen Arm (12) verbunden ist, wobei vorzugsweise ein Stoßdämpfer zwischen dem Gurtzeug (16) und dem proximalen Arm (12) bereitgestellt ist.

11. Mobilitätshilfevorrichtung (100) nach einem der vorhergehenden Ansprüche, wobei der Rahmen (26) ein linkes Element und ein rechtes Element umfasst, die durch Kugelgelenke (42) mit einem Querelement gekoppelt sind, in dem die erste Achse (10) untergebracht ist, wobei die Kugelgelenke vorzugsweise ein Langloch umfassen, das dazu konfiguriert ist, eine Abstandsänderung zwischen dem linken und dem rechten Element zu gestatten.

12. Mobilitätshilfevorrichtung (100) nach einem der vorhergehenden Ansprüche, wobei die Steuereinheit (36) dazu konfiguriert ist, eine von dem Benutzer angewendete Kraft zu interpretieren und einen Motor und/oder Aktuator anzuweisen, die Kraft zu unterdrücken oder zu ignorieren, wenn erkannt wird, dass sie unterhalb einer Schwellenkraft liegt, und/oder für weniger als eine Schwellendauer angewendet wird, wobei die Schwellenkraft und/oder -dauer einer unwillkürlichen Bewegung entsprechen.

13. Mobilitätshilfevorrichtung (100) nach einem der vorhergehenden Ansprüche, wobei die Steuereinheit (36) dazu konfiguriert ist, die Position des proximalen (12) und/oder des distalen Arms (14) in Bezug auf die Vertikale basierend auf Daten von einem Sensor zu bestimmen und als Reaktion auf die erfassten Daten entweder die Bewegung eines Benutzers (32) zu unterdrücken oder weiterzugeben, indem die Position des Gegengewichts (18) eingestellt wird, ein Winkel α zwischen dem proximalen und distalen Arm eingestellt wird, eine Steifigkeit in einem oder mehreren Rahmengelenken eingestellt wird, die Drehzahl und/oder Richtung der selbstausgleichenden Räder (22, 24) eingestellt wird und/oder die Steifigkeit eines Verbinders (40) zwischen dem Stützrad und dem Rahmen eingestellt wird.

14. Mobilitätshilfevorrichtung (100) nach dem vorhergehenden Anspruch, wobei die Steuereinheit (36) dazu konfiguriert ist, erfasste Daten zu interpretieren, um zu bestimmen, ob die Bewegung eines Benutzers willkürlich ist, und nur willkürliche Bewegungen weiterzugeben, wobei der Grad der Weitergabe und/oder Unterdrückung der Bewegung des Benutzers vorzugsweise einstellbar ist.

## Revendications

1. Dispositif d'aide à la mobilité (100) comprenant :
un ensemble de roues (30) connectées entre elles par un cadre (26),
un bras distal (14),
un bras proximal (12) et
un premier axe (10) entre le bras distal (14) et le bras proximal (12), dans lequel les bras distal et proximal sont agencés de manière pivotante autour du premier axe (10) et sont fonctionnellement connectés au cadre (26),
dans lequel un harnais (16) de réception d'un utilisateur (32) est prévu sur le bras proximal (12) à une longueur L₂ par rapport au premier axe (10),
dans lequel un contrepoids (18) est prévu sur un bras distal (14) à une longueur L₁ par rapport au premier axe (10) et dans lequel le contrepoids (18) et les deux longueurs L₁ et L₂ sont configurés pour compenser au moins partiellement le poids de l'utilisateur (32),
**caractérisé en ce que**
le dispositif d'aide à la mobilité (100) comprend en outre une unité de commande (36) et l'ensemble de roues comprend au moins deux roues auto-équilibrantes (22, 24),
dans lequel l'unité de commande (36) est configurée pour commander les roues auto-équilibrantes selon un principe de pendule inverse.

2. Dispositif d'aide à la mobilité (100) selon la revendication 1, dans lequel le premier axe (10) est agencé à une hauteur h₀ à partir d'un sol et les au moins deux roues auto-équilibrantes (22, 24) sont configurées pour tourner autour d'un second axe (20) agencé à une hauteur inférieure à h₀ à partir du sol, dans lequel h₀ est de préférence compris entre 0,3 et 1,2 m et une différence de hauteur Δh entre les premier et second axes étant de préférence d'au moins 0,25 m.

3. Dispositif d'aide à la mobilité (100) selon la revendication 2, dans lequel la position du premier axe (10) est décalée vers l'avant en direction d'un utilisateur (32) par rapport au second axe (20), de préférence de 0,2 à 6 cm, dans lequel de préférence le décalage entre les axes est réglable au moyen d'une fente (28) dans laquelle est logé le premier axe (10) .

4. Dispositif d'aide à la mobilité (100) selon l'une quelconque des revendications précédentes, dans lequel l'angle α formé entre le bras distal (14) et le bras proximal (12) est inférieur ou égal à 180°, de préférence compris entre 90° et 180°, plus préférablement compris entre 120° et 140°.

5. Dispositif d'aide à la mobilité (100) selon l'une quelconque des revendications précédentes, dans lequel le dispositif comprend en outre une roue de support (38) connectée de manière élastique sous le bras proximal (12), le bras distal (14) ou le cadre (26) et configurée pour empêcher la chute incontrôlée du harnais en cours d'utilisation.

6. Dispositif d'aide à la mobilité (100) selon la revendication 5, dans lequel la roue de support (38) est positionnée pour permettre à l'utilisateur (32) de faire varier sa hauteur dans une plage correspondant à la position debout sur la pointe des pieds, à la marche, à l'accroupissement et/ou au rampement.

7. Dispositif d'aide à la mobilité (100) selon l'une quelconque des revendications précédentes, dans lequel le contrepoids (18) a une masse comprise entre 5 et 30 kg, de préférence entre 8 et 12 kg.

8. Dispositif d'aide à la mobilité (100) selon l'une quelconque des revendications précédentes, dans lequel la position du contrepoids (18) sur le bras distal (14) est automatiquement variable, de préférence de sorte que L₁ peut être variée d'au moins +/- 1 cm.

9. Dispositif d'aide à la mobilité (100) selon l'une quelconque des revendications précédentes, dans lequel le cadre (26) est agencé sur des côtés externes des roues (30), laissant libre un espace entre les roues.

10. Dispositif d'aide à la mobilité (100) selon l'une quelconque des revendications précédentes, dans lequel le harnais (16) est connecté de manière pivotante au bras proximal (12), dans lequel un amortisseur de chocs est de préférence prévu entre le harnais (16) et le bras proximal (12).

11. Dispositif d'aide à la mobilité (100) selon l'une quelconque des revendications précédentes, dans lequel le cadre (26) comprend un élément gauche et un élément droit couplés au moyen de rotules (42) à un élément transversal logeant le premier axe (10), dans lequel les rotules comprennent de préférence une fente configurée pour s'adapter à un changement de distance entre les éléments gauche et droit.

12. Dispositif d'aide à la mobilité (100) selon l'une quelconque des revendications précédentes, dans lequel l'unité de commande (36) est configurée pour interpréter une force appliquée par l'utilisateur et pour commander à un moteur et/ou actionneur pour supprimer ou ignorer la force si elle est détectée comme étant inférieure à une force seuil et/ou est appliquée pendant moins d'une durée seuil, dans lequel la force seuil et/ou la durée seuil correspondent à un mouvement involontaire.

13. Dispositif d'aide à la mobilité (100) selon l'une quelconque des revendications précédentes, dans lequel l'unité de commande (36) étant configurée pour déterminer la position des bras proximal (12) et/ou distal (14) par rapport à la verticale sur la base de données provenant d'un capteur, et en réponse aux données détectées, pour supprimer ou propager le mouvement d'un utilisateur (32) par le réglage de la position du contrepoids (18), le réglage d'un angle α entre les bras proximal et distal, le réglage d'une rigidité dans une ou plusieurs articulations de cadre, le réglage de la vitesse et/ou direction des roues auto-équilibrantes (22, 24) et/ou le réglage de la rigidité d'un connecteur (40) entre la roue de support et le cadre.

14. Dispositif d'aide à la mobilité (100) selon la revendication précédente, dans lequel l'unité de commande (36) est configurée pour interpréter des données détectées pour déterminer si un mouvement d'un utilisateur est volontaire et pour propager uniquement des mouvements volontaires, dans lequel le degré de propagation et/ou de suppression du mouvement de l'utilisateur est de préférence réglable.
